# EUROPÄISCHE PATENTSCHRIFT

(11) **EP 0 561 944 B1**
(45) Veröffentlichungstag und Bekanntmachung des Hinweises auf die Patenterteilung: **07.09.1994**
(21) Anmeldenummer: 92901300.1
(22) Anmeldetag: 19.12.1991
(51) Int. Cl.: B62D 25/08, B62D 29/00

(54) **TRÄGERVERBINDUNG, INSBESONDERE LÄNGSTRÄGERVERBINDUNG, AN EINER KAROSSERIE FÜR EINEN PERSONENKRAFTWAGEN**
BEARER JOINT, ESPECIALLY LONGITUDINAL BEARER JOINT, IN COACHWORK FOR A PASSENGER CAR
LIAISON PORTEUSE, NOTAMMENT LONGERON PORTEUR DE LIAISON POUR LA CARROSSERIE DE VOITURES AUTOMOBILES

(30) Priorität: 20.12.1990 DE 4040982
(43) Veröffentlichungstag der Anmeldung: 29.09.1993
(73) Patentinhaber: AUDI AG, 85002 Ingolstadt (DE)
(72) Erfinder: STIELAU, Wilfried, D-8070 Ingolstadt (DE); KREIS, Gundolf, D-8072 Oberstimm (DE); RINKE, Klaus, Peter, D-8071 Wettstetten (DE); TIMM, Heinrich, D-8070 Ingolstadt (DE)
(74) Vertreter: Engelhardt, Harald
(86) Internationale Anmeldenummer: EP9102457
(87) Internationale Veröffentlichungsnummer: WO9211168

(56) Entgegenhaltungen:
- EP-A- 0 143 716
- EP-A- 0 454 942
- DE-A- 2 120 565
- DE-A- 3 811 427
- DE-A- 3 918 283
- FR-A- 775 182
- GB-A- 432 130
- US-A- 4 660 345

## Beschreibung

Die Erfindung betrifft eine Trägerverbindung, insbesondere eine Längsträgerverbindung, an einer Karosserie für einen Personenkraftwagen nach dem Oberbegriff des Anspruchs 1.

Übliche selbsttragende Fahrzeugkarosserien für Personenkraftwagen sind, einschließlich der Tragstruktur, aus Blechteilen hergestellt. Träger mit Hohlprofilen werden dabei aus jeweils zwei tiefgezogenen und miteinander verschweißten Blechen hergestellt. Trägerverbindungen werden meist dadurch hergestellt, daß diese mit ihren Enden überlappend aneinandergeführt sind und an den Anlagestellen mit Schweißnähten oder -punkten verbunden sind.

Die zum Aufbau solcher Karosserien verwendeten Stahlbleche werden im Tiefziehverfahren verformt. Die Preßwerkzeuge zum Verformen der Bleche sind verhältnismäßig teuer, lassen jedoch sehr hohe Stückzahlen zu, so daß für eine Großserienfertigung damit eine kostengünstige Lösung zur Verfügung steht. Aufgrund der hohen Werkzeuginvestitionen gestaltet sich das beschriebene Verfahren für Kleinserien jedoch sehr kostenintensiv.

Es ist daher insbesondere für Kleinserien bekannt (EP 0 146 716 B1), Fahrzeugkarosserien für Personenkraftwagen mit einer Tragstruktur aus Hohlprofilen herzustellen, welche durch Knotenelemente miteinander verbunden sind. Die Hohlprofile sind dabei als Leichtmetall-Strangprofile und die Knotenelemente als Leichtmetall-Gußteile ausgebildet. Neben einer kostengünstigeren Lösung für Kleinserien werden mit einer solchen Konstruktion auch geringere Karosseriegewichte und Verbesserungen beim Korrosionsschutz erreicht.

Bei einer solchen Leichtmetall-Karosserie ist die Längsträgeranordnung aus unterschiedlich profilierten Teilen durch Stecken und formschlüssiges Anlegen zusammengefügt und durch Schweißen verbunden. Längsträgerverbindungen sind insbesondere bei einem Frontalaufprall sehr hoch belastet, so daß solche Verbindungen sehr stark dimensioniert werden müssen, da sonst eine Bruchgefahr besteht.

Eine bekannte Trägerverbindung (DE-OS 38 11 427) zur Verlängerung bzw. axialen Verbindung von Hohlprofilträgerteilen einer Fahrzeugkarosserie verwendet ebenfalls eine Anlageverbindung mit Ausklinkungen und einer speziellen Klebetechnik. Eine solche Verbindung fluchtender Trägerteile mit unterschiedlichen Profilgestaltungen ist mit der bekannten Maßnahme nicht möglich, da dann die Profile und die Ausklinkungen am Längsstoß nicht mehr zusammenpassen.

Bei einer bekannten, gattungsgemäßen Trägerverbindung (FR-A-775 182) werden zwei axial aneinanderliegende Trägerteile eines Längsträgers (und zusätzliche Querträgerteile) durch ein Knotenelement miteinander verbunden. Das Knotenelement besteht aus zwei zusammenfügbaren Schalenteilen, die die Enden der aneinandergrenzenden und zu verbindenden Trägerteile formschlüssig umgreifen. Die Schalenteile sind im montierten Zustand miteinander und mit den Trägern verbunden.

Als Trägerteile sind hier zylindrische Rohre gleichen Außendurchmessers verwendet. Die Schalenteile sind einfache Blechhalbschalen, deren Trennungslinie bzw. Schweißnaht im eingebauten Zustand waagrecht und damit ungünstig in einer stark belasteten Zone liegt.

Aufgabe der Erfindung ist es demgegenüber, eine geeignete, stabile Trägerverbindung zwischen zwei axial aneinanderliegenden, für einen Frontalaufprall günstig dimensionierten, Trägerteilen eines Längsträgers zu schaffen.

Diese Aufgabe wird mit den Merkmalen des Anspruchs 1 gelöst.

Gemäß Anspruch 1 sind die Trägerteile als Leichtmetall-Strangprofile und die Schalenteile als Leichtmetall-Gußteile ausgebildet. Der erste Trägerteil weist ein bestimmtes, erstes Querschnittsprofil und der zweite Trägerteil ein bestimmtes, zweites Querschnittsprofil auf, dergestalt, daß sich an den Außenflächen im Anlagebereich der Trägerteile ein Stufensprung ergibt und der zweite Trägerteil in Axialrichtung eine höhere Steifigkeit als der erste Trägerteil hat. Die Schaleninnenflächen sind an die Außenflächen der Trägerteile am Stufensprung angepaßt. Die Trennungslinie der Schalenteile bzw. deren gegenseitige Anlageflächen stehen senkrecht.

Durch die Ausbildung des ersten Trägerteils mit geringerer Steifigkeit gegenüber dem zweiten Trägerteil durch unterschiedliche Querschnittsprofile in Leichtmetall-Strangprofilen wird erreicht, daß bei einem Frontalaufprall mit geringerer Aufprallenergie nur der vordere, erste Längsträgerteil verformt wird, während der nach hinten anschließende, zweite Längsträgerteil mit weiteren, angeschlossenen Rahmenteilen und Aggregaten unverformt bleibt. Die Schäden bei einem Frontalaufprall mit geringerer Aufprallenergie sind dadurch begrenzt und bei einer Reparatur braucht in der Tragstruktur nur jeweils der vordere, erste Trägerteil ausgewechselt werden. Die Trägerverbindung über Schalenteile eignet sich besonders für eine stabile, einfach herstellbare Verbindung solcher unterschiedlich dimensionierter Längsträgerteile, da der Querschnittsübergang als Stufensprung an den Außenflächen mit geeigneten Kraftverläufen bei geeignet angepaßten Wandstärken in den Schalenteilen durchgeführt werden kann. Durch die Ausführung der Schalenteile als Gußteile sind solche angepaßten Wandstärkenverläufe und Profilübergänge einfach herstellbar.

Zudem sind Gußschalenteile einfach herstellbar, da bei der Herstellung keine Schieber erforderlich sind.

Die Stabilität der Verbindung wird zudem dadurch erhöht, daß die Trennungslinie der Schalenteile bzw. deren Anlageflächen etwa in einer senkrechten Axialebene liegen. Bei einer Längsträgeranordnung aus zwei axial anschließenden Trägerteilen liegt in einer solchen senkrechten Axialebene ein weniger kritischer Belastungsbereich in der Nähe der sogenannten neutralen Faser. Schweiß- oder Klebeverbindungen für die Schalenteile liegen damit vorteilhaft in einem nicht so hoch belasteten Bereich.

Mit Anspruch 2 sind geeignete Verbindungstechniken durch Schweißen an den Außenrändern der Anlageflächen oder durch Kleben an den Anlageflächen beansprucht.

Eine weitere Verbesserung des Kraftverlaufs in der Trägerverbindung und eine geringere Belastung der Verbindungsnähte kann je nach Gegebenheiten mit den Merkmalen des Anspruchs 3 dadurch erreicht werden, daß die gegenseitigen Anlageflächen der Schalenteile bezüglich der zu verbindenden Trägerteile gegeneinander in Umfangsrichtung versetzt liegen.

Zur Material- und Gewichtseinsparung können je nach Gegebenheiten bei ausreichender Festigkeit nach Anspruch 4 Durchbrüche in den Schalenteilen enthalten sein.

Ein kostengünstiger und geeigneter Aufbau eines Längsträgers ergibt sich nach Anspruch 5 dadurch, daß der erste Trägerteil ein einfaches, zylindrisches Rohr ist. Das zweite Trägerteil höherer Steifigkeit wird als Strangprofilträger mit größerer Strukturierung ausgeführt.

In axialer Richtung kann nach Anspruch 6 durch Rippen oder Abstützungen in den Schalenteilen ein Formschluß zwischen den Trägerteilen hergestellt sein. Ein solcher axialer Formschluß wirkt sich für eine Längsträgeranordnung aus zwei Trägerteilen bei einem Frontalaufprall stabilitätserhöhend aus.

Bei einer Ausführung der Schalenteile als Gußteile können diese so stabil gestaltet sein, daß sie nach Anspruch 7 in einer weiteren Funktion als Trägerteile verwendbar sind, wobei vorteilhaft Anschlußträger und/oder Aufnahmen für Anbauteile an-geformt sind.

Anhand einer Zeichnung wird ein Ausführungsbeispiel der Erfindung mit weiteren Einzelheiten, Merkmalen und Vorteilen näher erläutert.

Die einzige Fig. zeigt in einer perspektivischen Darstellung eine erfindungsgemäße Längsträgerverbindung.

Ein Längsträger 1 im vorderen Bereich einer Karosserie eines Personenkraftwagens besteht aus einem vorderen, ersten Trägerteil 2 und einem in Axialrichtung anschließenden, zweiten Trägerteil 3. Das erste Trägerteil 2 ist ein zylindrisches Rohr aus einer Aluminiumlegierung. Das zweite Trägerteil 2 ist ein als Hohlprofil ausgeführtes Strangprofil, ebenfalls aus einer Aluminiumlegierung mit gegenüber dem ersten Trägerteil etwas größerem Querschnitt mit geraden Außenflächenteilen. Das erste Trägerteil 2 ist in seiner Steifigkeit gegenüber dem zweiten Trägerteil 3 geringer dimensioniert, so daß bei einem Frontalaufprall zuerst das erste Trägerteil 2 deformiert wird und bei geringer Aufprallenergie das zweite Trägerteil mit seinen Anschlußteilen unverformt bleibt.

Das erste Trägerteil 2 und das zweite Trägerteil 3 sind in Axialrichtung 4 fluchtend ausgerichtet und stoßen mit Endseiten 5 und 6 aneinander.

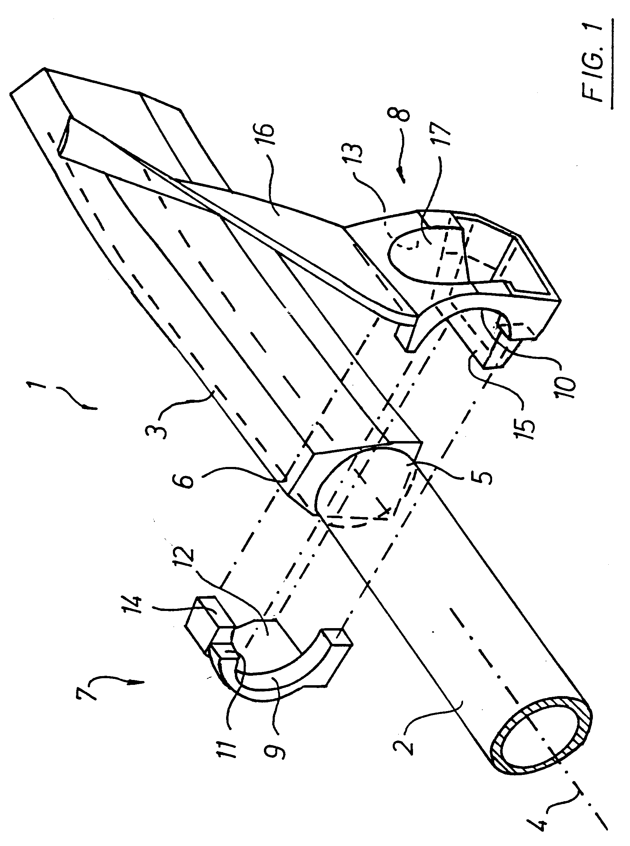

Für eine Verbindung der Trägerteile 2 und 3 bzw. der Endseiten 5 und 6 sind ein erstes Schalenteil 7 und ein zweites Schalenteil 8 verwendet, die in Fig. 1 im noch nicht montierten Zustand dargestellt sind.

Die beiden Schalenteile 7 und 8 enthalten in einem vorderen Teil halbringförmige Anlageflächen 9 und 10, die beim Zusammensetzen der Schalenteile 7 und 8 die zylindrische Endseite 5 des ersten Trägerteils 2 formschlüssig umfassen. Zudem liegen dann im Bereich der Anlageflächen 9 und 10 senkrecht stehende Trennflächen 11 der Schalenteile 7 und 8 aneinander.

In einem zweiten, zur Fahrzeugmitte bzw. zum zweiten Trägerteil 3 hinweisenden Bereich der Schalenteile 7 und 8 sind innere Anlageflächen 12 und 13 enthalten, die so geformt sind, daß sie beim Zusammensetzen der Schalenteile 7 und 8 den Endbereich 6 des zweiten Trägerteils 3 formschlüssig umfassen. Dabei liegen auch in diesem Bereich senkrecht stehende Trennflächen 14 der Schalenteile 7 und 8 aneinander. Die Trennflächen 11 und die Trennflächen 14 liegen nicht in einer Axialebene, sondern sind gegeneinander in Umfangrichtung versetzt.

Ein unterer, flacher Wandteil des zweiten Trägerteils 3 wird von einer unteren Platte 15 des zweiten Schalenteils 8 untergriffen und liegt mit einer Stirnseite an der Anlagefläche 12 des ersten Schalenteils 7 an.

An das zweite Schalenteil 8 ist ein Anschlußträger 16 angeformt, der beispielsweise zu einer Federbeinaufnahme führt.

In einem mittleren Bereich der Wand des zweiten Schalenteils 8 ist ein Durchbruch 17 enthalten.

Die dargestellte Trägeranordnung wird folgendermaßen montiert:
Es werden die beiden Trägerteile 2 und 3 axial fluchtend mit ihren Endseiten 5 und 6 aneinandergelegt. Anschließend werden die Schalenteile 7 und 8 um die Endseiten 5 und 6 herum angelegt und geschlossen. Sowohl die Schalenteile 7 und 8 als auch die zugänglichen Außenränder der Anlageflächen zu den Trägerteilen 2 und 3 werden dann durch Schweißen miteinander verbunden, so daß ein stabiles Knotenelement mit einer formschlüssigen Trägerverbindung entsteht, in der die Querschnittsübergänge zwischen den Trägerteilen 2 und 3 durchgeführt sind.

## Patentansprüche

1. Trägerverbindung zwischen zwei axial aneinanderliegenden Trägerteilen eines Längsträgers im Motorraum einer Personenwagenkarosserie,
wobei die Trägerteile durch ein Knotenelement miteinander verbunden sind und das Knotenelement aus wenigstens zwei zusammenfügbaren Schalenteilen besteht, die die Enden der aneinandergrenzenden und zu verbindenden Trägerteile formschlüssig umgreifen und die Schalenteile miteinander und/oder mit den Trägern verbunden sind,
dadurch gekennzeichnet,
daß die Trägerteile (2, 3) als Leichtmetall-Strangprofile und die Schalenteile (7, 8) als Leichtmetall-Gußteile ausgebildet sind,
daß der erste Trägerteil (2) ein bestimmtes, erstes Querschnittsprofil und der zweite Trägerteil (3) ein bestimmtes, zweites Querschnittsprofil aufweisen, dergestalt, daß sich an den Außenflächen im Anlagebereich der Trägerteile (2, 3) ein Stufensprung ergibt und der zweite Trägerteil (3) in Axialrichtung eine höhere Steifigkeit als der erste Trägerteil (2) hat,
daß die Schaleninnenflächen an die Außenflächen der Trägerteile (2, 3) am Stufensprung angepaßt sind und
daß die Trennungslinie der Schalenteile (7, 8) bzw. deren gegenseitige Anlageflächen (11, 14) senkrecht stehen.

2. Trägerverbindung nach Anspruch 1, dadurch gekennzeichnet, daß die Verbindung der Schalenteile (7, 8) untereinander und/oder mit den Trägern (2, 3) durch Schweißen an den Außenrändern der Anlageflächen (9, 10, 11, 12, 13, 14) oder durch Verkleben an den Anlageflächen (9, 10, 11, 12, 13, 14) erfolgt.

3. Trägerverbindung nach einem der Ansprüche 1 oder 2, dadurch gekennzeichnet, daß die gegenseitigen Anlageflächen (11, 14) der Schalenteile (7, 8) bezüglich der zu verbindenden Träger (2, 3) gegeneinander versetzt liegen.

4. Trägerverbindung nach einem der Ansprüche 1 bis 3, dadurch gekennzeichnet, daß die Wände der Schalenteile (8) in mittleren Bereichen Durchbrüche (17) enthalten.

5. Trägerverbindung nach einem der Ansprüche 1 bis 4, dadurch gekennzeichnet, daß der erste Trägerteil (2) ein zylindrisches Rohr ist.

6. Trägerverbindung nach einem der Ansprüche 1 bis 5, dadurch gekennzeichnet, daß durch Rippen oder Abstützungen in den Schalenteilen (7, 8) ein axialer Formschluß zwischen dem ersten Trägerteil (2) und dem zweiten Trägerteil (3) hergestellt ist.

7. Trägerverbindung nach einem der Ansprüche 1 bis 6, dadurch gekennzeichnet, daß an wenigstens einem Schalenteil (7, 8) Anschlußträger (16) und/oder Aufnahmen für Anbauteile angeformt sind.

## Claims

1. Beam connection between two axially contiguous beam parts of a side-member in the engine compartment of a passenger car bodyshell,
the beam parts being joined together by a gusset element and the gusset element consisting of at least two dish parts adapted to be assembled to one another and which clasp in a form-fit the ends of the adjacent beam parts to be connected, and the dish parts being joined to one another and/or to the beams,
characterised in that
the beam parts (2, 3) are in the form of extruded light-metal profiles and the dish parts (7, 8) are in the form of light-metal castings,
the first beam part (2) has a particular first cross-sectional profile and the second beam part (3) has a particular second cross-sectional profile, in such a manner that a step is formed on the outer faces in the contact region of the beam parts (2, 3) and the second beam part (3) has greater rigidity in the axial direction than the first beam part (2),
the inside faces of the dishes are adapted to fit the outer faces of the beam parts (2, 3) at the step, and
the line dividing the dish parts (7, 8), or rather their mutual contact faces (11, 14), is vertical.

2. Beam connection according to claim 1, characterised in that the dish parts (7, 8) are joined to one another and/or to the beams (2, 3) by welding at the outer edges of the contact faces (9, 10, 11, 12, 13, 14) or by gluing at the contact faces (9, 10, 11, 12, 13, 14).

3. Beam connection according to either of claims 1 or 2, characterised in that the mutual contact faces (11, 14) of the dish parts (7, 8) are offset from one another with regard to the beams (2, 3) to be connected.

4. Beam connection according to any of claims 1 to 3, characterised in that the walls of the dish parts (8) contain passages (17) in the central regions.

5. Beam connection according to any of claims 1 to 4, characterised in that the first beam part (2) is a cylindrical tube.

6. Beam connection according to any of claims 1 to 5, characterised in that ribs or supports in the dish parts (7, 8) produce an axial form-fit between the first beam part (2) and the second beam part (3).

7. Beam connection according to any of claims 1 to 6, characterised in that joining beams (16) and/or locators for add-on parts are formed on at least one dish part (7, 8).

## Revendications

1. Assemblage entre deux parties aboutées axialement d'un longeron dans le compartiment moteur de la carrosserie d'une voiture particulière,
les parties du longeron étant unies l'une a l'autre par un élément de jonction se composant d'au moins deux parties de coquille assemblables, qui enserrent étroitement les extrémités des parties contiguës du longeron devant être jointes, et les parties de coquille étant fixées l'une a l'autre et/ou aux parties du longeron,
caractérisé
en ce que les parties (2, 3) du longeron sont réalisées sous forme de profilés filés en métal léger et les parties de coquille (7, 8) sous forme de pièces en fonte de métal léger,
en ce que la première partie (2) du longeron présente un premier profil déterminé en coupe transversale et la seconde partie (3) du longeron présente un second profil déterminé en coupe transversale, de sorte qu'il existe sur les surfaces extérieures, un gradin dans la région de contact des parties (2, 3) du longeron, et que la seconde partie (3) du longeron a, en direction axiale, une rigidité plus grande que la première partie (2) du longeron,
en ce que les surfaces intérieures de la coquille sont adaptées aux surfaces extérieures des parties (2, 3) du longeron au niveau du gradin et
en ce que le plan de joint des parties de coquille (7, 8) ou leurs surfaces de contact mutuel (11, 14) sont verticales.

2. Assemblage selon la revendication 1, caractérisé en ce que la fixation des parties de coquille (7, 8) l'une a l'autre et/ou aux parties (2, 3) du longeron est effectuée par soudage au niveau des bords extérieurs des surfaces de contact (9, 10, 11, 12, 13, 14) ou par collage des surfaces de contact (9, 10, 11, 12, 13, 14).

3. Assemblage selon la revendication 1 ou 2, caractérisé en ce que les surfaces (11, 14) de contact mutuel des parties de coquille (7, 8) relatives aux parties (2, 3) du longeron devant être assemblées sont décalées mutuellement .

4. Assemblage selon l'une quelconque des revendications 1 à 3, caractérisé en ce que les parois des parties de coquille (8) comportent des évidements (17) dans les régions médianes.

5. Assemblage selon l'une quelconque des revendications 1 à 4, caractérisé en ce que la première partie (2) du longeron est un tube cylindrique.

6. Assemblage selon l'une quelconque des revendications 1 à 5, caractérisé en ce qu'un blocage axial entre la première partie (2) du longeron et la seconde partie (3) du longeron est créé par des nervures ou des appuis dans les parties de coquille (7, 8).

7. Assemblage selon l'une quelconque des revendications 1 à 6, caractérisé en ce que des supports de raccordement (16) et/ou des logements pour des éléments de construction rapportés sont formés d'une seule pièce avec l'une au moins des parties de coquille (7, 8).
